# EUROPÄISCHE PATENTSCHRIFT

(11) **EP 2 154 069 B1**
(45) Veröffentlichungstag und Bekanntmachung des Hinweises auf die Patenterteilung: **30.10.2013**
(21) Anmeldenummer: 09009251.1
(22) Anmeldetag: 16.07.2009
(51) Int. Cl.: B64D 17/38, B23D 15/14, B26D 5/12

(54) **Seiltrennvorrichtung**
Cable severing apparatus
Dispositif de séparation de corde

(30) Priorität: 01.08.2008 DE 102008036000
(43) Veröffentlichungstag der Anmeldung: 17.02.2010
(73) Patentinhaber: EADS Deutschland GmbH, 85521 Ottobrunn (DE)
(72) Erfinder: Obkircher, Bernt, 88263 Horgenzell (DE); Weimer, Peter, 88677 Markdorf (DE)
(74) Vertreter: Meel, Thomas

(56) Entgegenhaltungen:
- US-A- 874 150
- US-A- 2 534 704
- US-A- 3 388 879

## Beschreibung

Die Erfindung betrifft eine Seiltrennvorrichtung, deren Zweck es ist, ein Seil, eine Leine oder ein sonstiges strangartiges Gebilde (im Folgenden generell als Seil bezeichnet) in einer bestimmten Situation definiert zu trennen. Anwendung finden derartige Seiltrennvorrichtungen insbesondere in Fall- oder Gleitschirmsystemen.

Zu diesem Zweck werden üblicherweise Kappvorrichtungen eingesetzt, die das Seil, ggf. nach einer definierten Verzögerungszeit nach dem Auslöseimpuls, mittels einer Schneidevorrichtung durchtrennen, siehe z.B. DE 102 30 535 A1. Bekannt sind z.B. pyrotechnische Kappvorrichtungen, die von einem pyrotechnischen Treibsatz aktiviert werden. Dokument US 2 534 704 zeigt eine Seiltrennvorrichtung gemäß dem Oberbegriff des Anspruchs 1.

Derartige bekannte Kappvorrichtungen weisen ein relativ großes Gewicht und Volumen auf und benötigen eine äußere Ansteuerung. Im Falle von pyrotechnischen Kappvorrichtungen kommt noch hinzu, dass dabei Gefahrenstoffe zum Einsatz kommen, für die verschärfte amtliche Vorschriften beim Umgang mit ihnen zu beachten sind.

Es ist deshalb Aufgabe der Erfindung, eine Seiltrennvorrichtung zu schaffen, mit der die oben genannten Nachteile der bekannten Kappvorrichtungen überwunden werden können.

Diese Aufgabe wird mit dem Gegenstand des Patentanspruchs 1 gelöst. Vorteilhafte Ausführungen sind Gegenstand von Unteransprüchen.

Die erfindungsgemäße Seiltrennvorrichtung wird in das zu trennende Seil eingebaut. Die Trennung geschieht dadurch, dass die Seiltrennvorrichtung zum gewünschten Zeitpunkt in zwei Teile auseinanderfällt.

Die erfindungsgemäße Vorrichtung ermöglicht es, die Verzögerung zwischen Auslöseimpuls und Trennung einzustellen. Sie ist klein, leicht und kompakt gebaut und kommt ohne Pyrotechnik aus.

Die Erfindung wird anhand eines Ausführungsbeispiels unter Bezugnahme auf eine Figur beschrieben. Sie zeigt eine erfindungsgemäße Vorrichtung in einem axialen Querschnitt kurz vor der Trennung.

Die erfindungsgemäße Trennvorrichtung besteht aus den Hauptteilen Zylinder 10 und Kolben 20. Diese sind jeweils zum Anschluss an die beiden Abschnitte des Seils vorgesehen, in die das Seil nach der Trennung zerfällt. Zum Anschluss sind die Bohrungen 1,2 vorgesehen.

Der Kolben 20 ist im Zylinder 10 eingeschoben und teilt diesen in zwei Teilräume 15,16, die mit einer inkompressiblen Flüssigkeit gefüllt sind. An einer Seite ist der Zylinder 10 mit einem Abschlussdeckel 11 abgeschlossen, der den Zylinder abdichtet.

Der Kolben 20 weist eine Bohrung 22 als Fließkanal für die Flüssigkeit auf, um einen Flüssigkeitsaustausch zwischen den beiden Zylinderteilräumen 15,16 vor und hinter dem Kolben 20 zu ermöglichen.

Im Kolben 20 ist vorteilhaft eine Berstscheibe 21 eingebaut, die vor dem Fließkanal 22 angeordnet ist. Im unversehrten Zustand dichtet sie den Fließkanal 22 ab. Dadurch wird ein vorzeitiges Verschiebung des Kolbens 20 aus seiner Ausgangsstellung vermieden, z.B. falls beim Hantieren oder Verpacken Zug im Seil auftritt.

Eine Kolbenstange 23 läuft in einer Bohrung im Abschlussdeckel 11. An ihrem zylinderfernen Ende befindet sich ein Seilanschlusskörper 25. Kolben 20 und Seilanschlusskörper 25 sind über die Kolbenstange 23 fest miteinander verbunden.

Zylinder 10 und Abschussdeckel 11 werden von einer Verschlusseinrichtung mit mehreren Verschlusssegmenten 13 gehalten. In dieser Ausführung sind genau drei Verschlusssegmente 13 über den Zylinderumfang verteilt vorhanden (in der Fig. sind nur zwei davon zu erkennen). Die Verschlusssegmente 13 umgreifen eine wulstartige Erweiterung 12 an Abschlussdeckel 11 und Zylinder 10 und sind mit einem umlaufenden äußeren Verschlussring 14 gesichert, der sie in Position hält.

Der Verschlussring 14 ist mit Auslöseseilen 26 an dem Seilanschlusskörper 25 befestigt. Insgesamt sind in der gezeigten Ausführung drei Auslöseseile 26 vorhanden, die gleichmäßig über den Umfang des Verschlussrings 14 verteilt sind. Die Länge der Auslöseseile 26 ist auf die Länge des Laufwegs des Kolbens 20 im Zylinder 10 abgestimmt.

Am Anfang des Trennvorgangs ist der Kolben 20 ganz in den Zylinder 10 eingeschoben. Die Auslöseseile 26 sind in dieser Kolbenstellung schlaff ohne Spannung. Der Trennimpuls geht von einem Zugbelastungsstoß im Seil aus, der zum Beispiel der Entfaltungsstoß beim Öffnen eines Fallschirms sein kann. Die Kraft dieses Entfaltungsstoßes bringt die Berstscheibe 21 zum Platzen, und die nach dem Entfaltungsstoß auf dem Seil noch vorhandene Kraft (=Last am Fallschirm) zieht den Kolben 20 aus dem Zylinder 10, indem Flüssigkeit durch das entstandene Loch in der Berstscheibe 21 und durch die darunterliegende Bohrung 22 im Kolben 20 aus dem ersten Teilraum 15 in den zweiten Teilraum 16 im Zylinder 10 gedrückt wird. Dadurch wandert der Kolben 20 im Zylinder 10 langsam aus dem Zylinder 10 heraus.

Wenn der Kolben 20 wie in der Fig. gezeigt in den Endbereich seines Laufwegs im Zylinder 10 gelangt, gehen die Auslöseseile 26 auf Zug und ziehen den Verschlussring 14 von den Verschlusssegmenten 13, die wegen des schräg angestellten Wulstes 12 an Zylinder 10 und Abschlussdeckel 11 und des inneren Überdrucks im Teilraum 15 nach außen weggedrückt werden. Dadurch wird zunächst der Abschlussdeckel 11 von dem Zylinder 10 getrennt und der Kolben 20 verlässt den Zylinder 10. Der Kolben 20 hängt zusammen mit Kolbenstange 23, Seilanschlusskörper 25, Auslöseseilen 26 und Verschlussring 14 frei am Ende des angeschlossenen Seilabschnitts. Am Ende des anderen Seilabschnitts verbleibt der Zylinder 10. Das Seil ist somit getrennt.

Die Länge des Laufwegs des Kolbens 20 im Zylinder, der Durchmesser der Bohrung 22 im Kolben 20 und die Viskosität der Flüssigkeit bestimmen die Verzögerungszeit zwischen dem Auslöseimpuls bis zur Trennung des Seils.

Um den Verlust von Bauteilen bei der Trennung zu vermeiden, können die Verschlusssegmente 14 mit Sicherungsdrähten 3 z.B. mittels einer Klemmvorrichtung am Zylinder 10 befestigt sein.

Um ein Verklemmen zwischen dem Wulst 12 an Zylinder 10 und Abschlussdeckel 11 auf der einen und den Verschlusssegmenten 14 auf der anderen Seite zu vermeiden, können die Materialien aufeinander abgestimmt sein. So kann die Kombination Stahl (für Zylinder 10 und Abschlussdeckel 11) und einer Bronzelegierung (für die Verschlusssegmente 13) besonders geeignet sein.

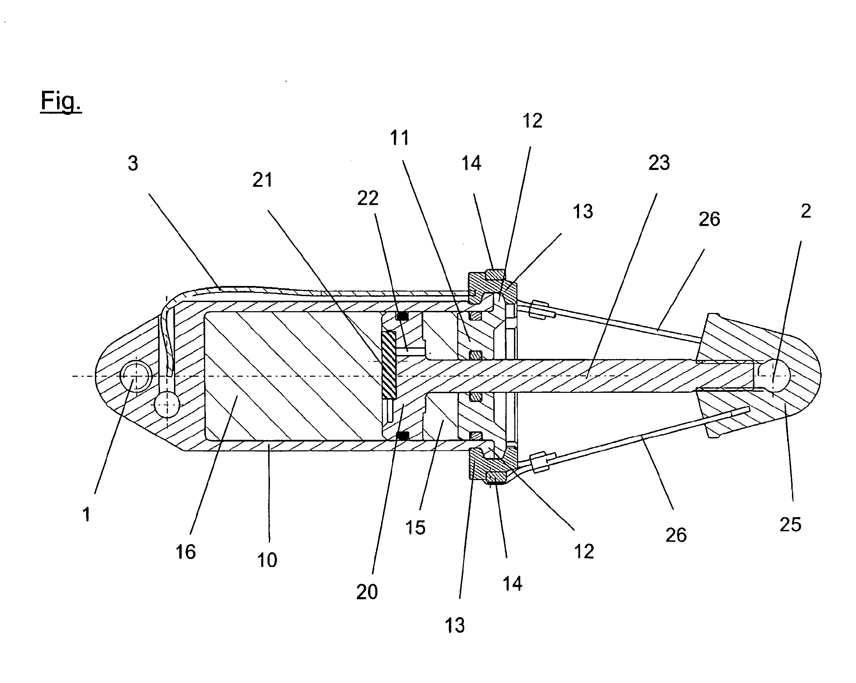

## Patentansprüche

1. Seiltrennvorrichtung mit folgenden Merkmalen:
- sie weist zum Anschluss an einen ersten Seilabschnitt einen fluidgefüllten Zylinder (10) mit Abschlussdeckel (11) auf, sowie
- zum Anschluss an einen zweiten Seilabschnitt einen in dem Zylinder (10) geführten Kolben (20) mit Kolbenstange (23), wobei der Kolben (20) eine Bohrung (22) als Fließkanal für das Fluid aufweist, so dass ein Austausch des Fluids für die beiden Zylinderteilräume (15,16) beiderseits des Kolbens (20) ermöglicht wird, und
- eine Verschlusseinrichtung (13,14) zur fluiddichten Verbindung von Zylinder (10) und Abschlussdeckel (11),
**dadurch gekennzeichnet, dass**
- ein oder mehrere mit der Kolbenstange (23) verbundene Auslöseseile (26), die, sobald der Kolben (20) unter der Zugkraft in den Seilabschnitten einen vorbestimmten Weg zurückgelegt hat, die Verschlusseinrichtung (13,14) öffnen, so dass die beiden Seilabschnitte voneinander getrennt werden.

2. Seiltrennvorrichtung nach Anspruch 1, **dadurch gekennzeichnet, dass** die Verschlusseinrichtung (13,14) folgende Elemente umfasst:
- mehrere, eine umlaufende, wulstartige Erweiterung (12) an Zylinder (20) und Abschlussdeckel (11) umgreifende Verschlusssegmente (13),
- einen die Verschlusssegmente (13) umschließenden Verschlussring (14), an dem der oder die Auslöseseile (26) befestigt ist.

3. Seiltrennvorrichtung nach Anspruch 1 oder 2, **dadurch gekennzeichnet, dass** am Ende der Kolbenstange (23) ein Seilanschlusskörper (25) vorhanden ist, an dem das oder die Auslöseseile (26) befestigt sind.

4. Seiltrennvorrichtung nach einem der vorangehenden Ansprüche, **dadurch gekennzeichnet, dass** eine Berstscheibe (21) vorhanden ist, welche im unversehrten Zustand den Fließkanal (22) blockiert.

5. Seiltrennvorrichtung nach einem der vorangehenden Ansprüche, **dadurch gekennzeichnet, dass** Zylinder (10) und Abschlussdeckel (11) aus Stahl und die Verschlusssegmente (13) aus Bronze bestehen.

## Claims

1. Cable separation apparatus having the following features:
- the apparatus has a fluid-filled cylinder (10), with a closure cover (11), for connection to a first cable section, as well as
- a piston (20), which is guided in the cylinder (10) and has a piston rod (23), for connection to a second cable section, with the piston (20) having a hole (22) as a flow channel for the fluid so as to allow the fluid to be exchanged for the two cylinder subareas (15, 16) on both sides of the piston (20), and
- a sealing device (13, 14) for fluid-tight connection of the cylinder (10) and closure cover (11),
**characterized in that**
- one or more release cables (26) which is or are connected to the piston rod (23) and opens the sealing device (13, 14) as soon as the piston (20) has moved back through a predetermined distance under the tensile force into the cable sections, such that the two cable sections are separated from one another.

2. Cable separation apparatus according to Claim 1, **characterized in that** the sealing device (13, 14) comprises the following elements:
- a plurality of sealing segments (13) which surround a circumferential bead-like widened area (12) on the cylinder (20) and the closure cover (11),
- a sealing ring (14) which surrounds the sealing segments (13) and to which the release cable or cables (26) is or are attached.

3. Cable separation apparatus according to Claim 1 or 2, **characterized in that** a cable connecting body (25), to which the release cable or cables (26) is or are attached, is provided at the end of the piston rod (23).

4. Cable separation apparatus according to one of the preceding claims, **characterized in that** a bursting disc (21) is provided and blocks the flow channel (22) when in the sound state.

5. Cable separation apparatus according to one of the preceding claims, **characterized in that** the cylinder (10) and the closure cover (11) are composed of steel, and the sealing segments (13) are composed of bronze.

## Revendications

1. Dispositif de séparation de corde, présentant les caractéristiques suivantes :
- il comprend, en vue du raccordement à un premier tronçon de corde, un cylindre (10) rempli de fluide et pourvu d'un couvercle de terminaison (11) ainsi que,
- en vue du raccordement à un deuxième tronçon de corde, un piston (20) guidé dans le cylindre (10), et pourvu d'une tige de piston (23), le piston (20) comprenant un alésage (22) faisant office de conduit d'écoulement pour le fluide, de manière à permettre un échange du fluide pour les deux espaces partiels de cylindre (15, 16) de part et d'autre du piston (20) et
- un dispositif de fermeture (13, 14) pour relier de manière étanche aux fluides le cylindre (10) et le couvercle de terminaison (11),
**caractérisé en ce que**
- une ou plusieurs cordes de libération (26) reliée(s) à la tige de piston (23) ouvre(nt) le dispositif de fermeture (13, 14) dès que le piston (20) a parcouru une course prédéfinie sous l'effet de la force de traction dans les tronçons de corde, de telle sorte que les deux tronçons de corde soient séparés l'un de l'autre.

2. Dispositif de séparation de corde selon la revendication 1, **caractérisé en ce que** le dispositif de fermeture (13, 14) comporte les éléments suivants :
- plusieurs segments de fermeture (13) venant en prise autour d'un élargissement (12) périphérique de type bourrelet sur le cylindre (20) et le couvercle de terminaison (11),
- une bague de fermeture (14) entourant les segments de fermeture (13), sur laquelle bague de fermeture est/sont fixée(s) la ou les cordes de libération (26).

3. Dispositif de séparation de corde selon la revendication 1 ou 2, **caractérisé en ce qu'**un corps de raccordement de corde (25) est prévu à l'extrémité de la tige de piston (23), sur lequel corps de raccordement de corde est/sont fixée(s) la ou les cordes de libération (26).

4. Dispositif de séparation de corde selon l'une quelconque des revendications précédentes, **caractérisé en ce qu'**un disque de rupture (21) est prévu, lequel bloque, à l'état intact, le conduit d'écoulement (22).

5. Dispositif de séparation de corde selon l'une quelconque des revendications précédentes, **caractérisé en ce que** le cylindre (10) et le couvercle de terminaison (11) sont constitués d'acier et les segments de fermeture (13) sont constitués de bronze.
